# EUROPÄISCHE PATENTSCHRIFT

(11) **EP 3 729 034 B1**
(45) Veröffentlichungstag und Bekanntmachung des Hinweises auf die Patenterteilung: **18.12.2024**
(21) Anmeldenummer: 18785336.1
(22) Anmeldetag: 09.10.2018
(51) Int. Cl.: G01L 1/14

(54) **ELASTISCHES LAGERELEMENT**
ELASTIC BEARING ELEMENT
ÉLÉMENT DE PALIER ÉLASTIQUE

(30) Priorität: 19.12.2017 DE 102017223195
(43) Veröffentlichungstag der Anmeldung: 28.10.2020
(73) Patentinhaber: ContiTech Vibration Control GmbH, 30175 Hannover (DE)
(72) Erfinder: GARBERS, Norbert, 30149 Hannover (DE); TYROLLER, Tobias, 30149 Hannover (DE); NARBERHAUS, Stefan, 30149 Hannover (DE)
(74) Vertreter: Continental Corporation
(86) Internationale Anmeldenummer: PCT/EP2018/077374
(87) Internationale Veröffentlichungsnummer: WO 2019/120661

(56) Entgegenhaltungen:
- EP-A2- 0 245 111
- EP-B1- 2 842 992
- DE-U1- 202015 100 442
- FR-A1- 2 878 998
- US-A- 3 623 360
- US-A1- 2003 056 600

## Beschreibung

US3623360 und FR2878998 offenbaren elastische Lagerelemente mit Kraftsensoren.

Die vorliegende Erfindung betrifft ein elastisches Lagerelement gemäß des Patentanspruchs 1.

Es ist der Einbau von Wägezellen und Kraftmessdosen zur Messung von Kräften am Ort der elastischen Lagerung bekannt. Diese Sensoren werden zusätzlich zur elastischen Lagerung z.B. parallel oder in Reihe zum zu erfassenden Kraftfluss angeordnet. Derartige übliche am Markt erhältliche Sensoren basieren auf DMS-Sensorik (Dehnungsmessstreifen) oder auf Piezo-Sensorik, z.T. mit integrierten Verstärkern. Beispielweise können Biegebalken verwendet werden, auf denen DMS-Sensorelemente aufgeklebt sind. Alternativ können z.B. bei Luftfedern Luftdruckmessungen innerhalb der Luftfeder erfolgen.

Nachteilig ist hierbei, dass jeweils ein zusätzliches Bauteil erforderlich ist, welches integriert werden muss. Dies kann zu zusätzlichen Kosten führen sowie zusätzlichen Bauraum erfordern. Ferner kann der Sensor zusätzlich vor äußeren Einflüssen zu schützen sein.

Nachteilig ist weiterhin bei der Verwendung von DMS-Sensorelementen, dass diese lediglich Spannungen bzw. Biegungen in einer einzigen Raumrichtung erfassen können. Dies kann zu fehlerhaften Messungen führen, falls zumindest Kraftanteile in einer anderen Raumrichtung auftreten. Diesen Nachteil durch eine Mehrzahl von DMS-Sensorelementen zu beheben kann den Aufwand und die Kosten sowohl der DMS-Sensorelemente selbst als auch der Elektronik zur Auswertung und Umrechnung der Spannungswerte erhöhen und damit ebenfalls verteuern.

Nachteilig bei der Luftdruckmessung in Luftfedern kann sein, dass Luft kompressibel ist und somit der erfasste Druckwert geringer als die tatsächlich ausgeübte Kraft sein kann.

Nachteilig bei der Druckmessungen mit Fluid ist allgemein die Entfernung der im System vorhandenen Luft. Dabei stellt sich die Entlüftung des Systems häufig als schwierig dar, insbesondere wenn die Luft möglichst vollständig aus dem System zu entfernen ist. Die im System ungewollt vorhandene Luft kann durch ihre Kompressibilität die Genauigkeit der Messung reduzieren.

Eine Aufgabe der vorliegenden Erfindung ist es, eine Kraftmessung am Ort eines elastischen Lagerelements der eingangs beschriebenen Art einfacher und bzw. oder kostengünstiger und bzw. oder genauer als bisher bekannt durchführen zu können. Insbesondere soll auf zusätzliche Bauteile wie z.B. Wägezellen verzichtet werden können.

Die Aufgabe wird erfindungsgemäß durch ein elastisches Lagerelement mit den Merkmalen gemäß Anspruch 1 gelöst. Vorteilhafte Weiterbildungen sind in den Unteransprüchen beschrieben.

Die vorliegende Erfindung betrifft somit ein elastisches Lagerelement mit wenigstens einem ersten Körper, mit wenigstens einem zweiten Körper und mit wenigstens einem Elastomerelement, welches in der Richtung eines Kraftflusses zwischen dem ersten Körper und dem zweiten Körper angeordnet ist. Das Elastomerelement ist elastisch ausgebildet, d.h. es kann unter Krafteinwirkung seine Form verändern und bei Wegfall der einwirkenden Kraft in seine Ursprungsform zurückkehren. Vorzugsweise weist das Elastomerelement eine vulkanisierte Kautschukmischung auf bzw. ist hieraus ausgebildet.

Das elastische Lagerelement weist ferner wenigstens einen Sensor auf, welcher ausgebildet und angeordnet ist, eine Kraft im Kraftfluss zwischen dem ersten Körper und dem zweiten Körper direkt oder indirekt zu erfassen. Zu einer direkten Erfassung der Kraft kann der Sensor zwischen den beiden Körpern direkt im Kraftfluss angeordnet sein. Zur indirekten Erfassung der Kraft kann der Sensor außerhalb des Kraftflusses angeordnet sein, wobei z.B. über ein Fluid, welches im Kraftfluss angeordnet ist, eine Übertragung von Kräften auf den Sensor erfolgen kann. Die beiden Körper sind dazu ausgebildet, jeweils mit einem weiteren Körper feststehend verbunden zu werden, so dass über das Elastomerelement eine Kraftübertragung erfolgen kann, wobei eine dynamische Kraftübertragung durch die elastische Eigenschaft des Elastomerelements gedämpft werden kann. Die beiden Körper sind vorzugsweise starr, insbesondere aus Metall, ausgebildet. Die beiden Körper können auch als Anschlagelemente bezeichnet werden.

Das elastische Lagerelement ist dadurch gekennzeichnet, dass der Sensor wenigstens eine elastische Schicht, wenigstens eine erste Elektrode und wenigstens eine zweite Elektrode aufweist, wobei die elastische Schicht zumindest abschnittweise zwischen der ersten Elektrode und der zweiten Elektrode angeordnet ist. Die elastische Schicht weist vorzugsweise ein elastomeres Material auf bzw. ist hieraus ausgebildet. Die elastische Schicht ist nichtelektrisch leitfähig, d.h. elektrisch isolierend bzw. dielektrisch, ausgebildet, um die beiden Elektroden elektrisch gegenüber einander zu isolieren. Das elastomere Material der elastischen Schicht weist vorzugsweise eine vulkanisierte Kautschukmischung auf bzw. ist hieraus ausgebildet, wobei z.B. auch Polyurethane verwendet werden können. Unter einer Elektrode ist ein Elektronenleiter zu verstehen, welcher im Zusammenspiel mit einer zweiten (Gegen-)Elektrode mit einem zwischen beiden Elektroden befindlichen Medium wie hier der elastischen Schicht in Wechselwirkung steht. Elektroden können elektrische Leiter wie z.B. Metall oder Graphit aufweisen oder hieraus bestehen. Die Elektroden können flächig oder linienförmig ausgebildet sein. Mittels eines derartigen Sensors kann der Abstand zwischen den beiden Elektroden z.B. kapazitiv erfasst werden.

Der Sensor ist derart im Kraftfluss zwischen dem ersten Körper und dem zweiten Körper angeordnet, so dass durch die Kraft der Abstand der beiden Elektroden zueinander verändert und hierüber die Kraft zumindest teilweise erfasst werden kann. Mit anderen Worten ist der Sensor ausgebildet, über den Abstand der beiden Elektroden zueinander auf die Stärke der Kraft zwischen den beiden Körpers zu schließen, welche diesen Abstand verändert. Aufgrund der elastischen Eigenschaft des Elastomerelements kann sich der Abstand zwischen den beiden Elektroden bei einer zunehmenden Kraft verringern. Ebenso kann sich der Abstand zwischen den beiden Elektroden bei einer Abnahme der Kraft wieder zurück auf den Abstand im unbelasteten Zustand vergrößern.

Die elastische Schicht weist eine Kautschukmischung auf, welche wenigstens einen Silikonkautschuk als einzige Kautschukkomponente und Mikrohohlkugeln aufweist. Hierbei können alle der fachkundigen Person bekannten Silikonkautschuke verwendet werden. Vorzugsweise können Silikonkautschuke verwendet werden, welche auch als Poly(or-gano)siloxane bezeichnet werden können. Diese weisen für Vernetzungsreaktionen zugängige Gruppen auf, wobei es sich vorwiegend, aber nicht ausschließlich, um Wasserstoffatome, Hydroxygruppen und Vinylgruppen handelt, welche sich jeweils in der Kette oder an den Kettenenden befinden können.

Es können sowohl kaltvernetzende Silikonkautschuke (RTV = Raumtemperatur vernetzend) als auch heißvernetzende Silikonkautschuke (HTV = Hochtemperatur vernetzend) verwendet werden. Bei den RTV-Silikonkautschuken lassen sich Ein- und Zweikomponentensysteme unterscheiden. Der Silikonkautschuk kann auch als Vormischung aus Polymer, Füllstoff und Öl, wie auf dem Markt üblich, eingesetzt werden.

Insbesondere zur Einstellung der Viskosität kann die Kautschukmischung zusätzlich noch wenigstens einen Weichmacher aufweisen. Hierbei können alle der fachkundigen Person bekannten Weichmacher verwendet werden, die kompatibel mit dem jeweiligen Silikonkautschuk sind. Insbesondere die Verwendung von Silikonöl hat sich hierbei als vorteilhaft erwiesen, da dies gut mit dem Silikonkautschuk verträglich ist. Besonders gut geeignet haben sich einvernetzende Silikonöle gezeigt, die sich an der Vernetzung der Kautschukmischung beteiligen und häufig als vernetzbare Silikonöle bezeichnet werden. Diese führen zu einer weiteren deutlichen Reduzierung eines möglichen Ausschwitzens von Weichmachern, wie es bei den Isolierschläuchen aus dem Stand der Technik bisweilen beobachtet werden kann.

Um die Elastizität bzw. die Kompressibilität der Kautschukmischung zu erhöhen, weist die Kautschukmischung eine Porenstruktur auf. Hierdurch können gleichzeitig die thermischen oder auch akustischen Isolationseigenschaften der Kautschukmischung verbessert werden. Diese Porenstruktur erfolgt durch den Einsatz von Mikrohohlkugeln, die in die Kautschukmischung eingemischt sind. Bei den Mikrohohlkugeln, oft auch einfach als Mikrokugeln bezeichnet, handelt es sich um hohle Kugeln (Mikrosphären) mit einem Durchmesser im µm-Bereich aus Glas, Phenolharz, Kohlenstoff oder thermoplastischem Kunststoffmaterial. Es gibt sie in expandierbarer Form, wobei sie mit einem Treibmittel gefüllt sind und sich beim Erwärmen ausdehnen, oder in vorexpandierter Form, bei der die Ausdehnung schon abgeschlossen ist. Bevorzugt enthält die Kautschukmischung 2 bis 200 phr Mikrokugeln, besonders bevorzugt 2 bis 30 phr, ganz besonders bevorzugt 2 bis 15 phr bereits expandierte Mikrokugeln aus thermoplastischen Material, so dass die Kautschukmischung bereits vor der dem Aufbau der elastischen Schicht bzw. vor der Vernetzung eine Porenstruktur aufweist.

Neben der hierdurch erhöhten Elastizität bzw. Kompressibilität der Kautschukmischung bieten Mikrokugeln ferner den Vorteil der Bildung einer geschlossenen Porenstruktur, die für Isolationszwecke wegen geringerer Konvektion in den Poren besser geeignet ist. Je höher die Menge an expandierten Mikrokugeln, desto besser wird durch den höheren Porenanteil die Isolationswirkung. Bei zu großen Mengen an Mikrokugeln können sich jedoch verarbeitungstechnische Probleme bei der Mischungsherstellung oder -verarbeitung ergeben.

Alternativ kann die Kautschukmischung 10 bis 200 phr Mikrokugeln aus Glas enthalten. Mit dieser Variante lässt sich eine Kautschukmischung mit höherer Standfestigkeit bei jedoch geringerer Elastizität bzw. Kompressibilität erhalten, da sich Mikrokugeln aus Glas im Gegensatz zu Mikrokugeln aus thermoplastischem Material nicht komprimieren lassen. Diese reduzierte Elastizität bzw. Kompressibilität, welche dennoch größer als bei bekannten derartigen Sensoren sein kann, kann je nach Anwendungsfall ggfs. zugunsten der höheren Standfestigkeit bzw. Lebensdauer der elastischen Schicht in Kauf genommen werden.

Der vorliegenden Erfindung liegt dabei die Erkenntnis zugrunde, dass mittels eines derartigen Sensors aufgrund der vergleichsweise hohen Elastizität bzw. Kompressibilität der elastischen Schicht des Sensors ein überdurchschnittlich sensibler Sensor geschaffen werden kann, welcher entsprechend genaue Messwerte liefern kann. Gleichzeitig kann ein derartiger Sensor einfach und robust in ein derartiges elastisches Lagerelement integriert werden. Auf diese Art und Weise kann eine vergleichsweise genaue Messung der Kraft im Kraftfluss eines derartigen elastischen Lagerelements geschaffen werden, ohne hierzu externe und ggfs. zu schützende Bauteile zu verwenden. Gleichzeitig kann ein derartiger Sensor bzw. eine derartige elastische Lageranordnung einfach und bzw. oder kostengünstig umgesetzt werden. Auch kann ein derartiger Sensor bzw. eine derartige elastische Lageranordnung robust gegen Umwelteinflüsse wie z.B. Wasser, Feuchtigkeit, Staub, Schlamm, Steine und dergleichen sein.

Der Sensor kann dabei innerhalb des Elastomerelements oder zwischen dem Elastomerelement und einem der beiden Körper angeordnet werden. Hierdurch kann je nach Anwendungsfall eine Anordnung geschaffen werden, um die Kraft des jeweiligen Kraftflusses möglichst wirkungsvoll und genau erfassen zu können.

Vorteilhaft ist auch, dass ein derartiger Sensor für eine direkte Erfassung der Kraft in dem Kraftfluss zwischen den beiden Körpern angeordnet werden kann. Hierdurch kann auf eine Kraftübertragung z.B. mittels eines Fluids verzichtet werden.

Vorteilhaft ist ferner, dass ein derartiger Sensor bereits vor der Vulkanisation des Elastomerelements in dieses integriert bzw. an diesem angeordnet werden kann. Dies kann die Herstellung des elastischen Lagerelements als Ganzes vereinfachen, um die sensorische Funktion zu schaffen.

Vorteilhaft ist des Weiteren, dass ein derartiges elastisches Lagerelement auch nachträglich geschaffen werden kann, indem ein derartiger Sensor in ein bestehendes elastisches Lagerelement eingebracht wird. Somit können die erfindungsgemäß erreichbaren Eigenschaften und Vorteile bei bestehenden hierzu geeigneten elastischen Lagerelementen nachgerüstet und genutzt werden.

Es können auch mehrere derartige Sensoren, welche gleich oder unterschiedlich ausgebildet und angeordnet sein können, verwendet werden. Hierdurch können Messwerte an mehreren Stellen unabhängig voneinander erfasst werden. Diese mehreren Messwerte können beispielsweise dahingehend ausgewertet werden, um Verkippungen und bzw. oder Verdrehungen des elastischen Lagerelements zu erkennen sowie das Maß der Verkippung bzw. Verdrehung zu erkennen.

Der Sensor kann dabei in allen möglichen Formen ausgebildet und angeordnet sein. Beispielsweise kann der Sensor geradlinig, gebogen, spiralförmig, kreisförmig, als Innen- und als Außenkreis, in Kreuzform, dreieckig, viereckig etc. verlegt werden. Hierdurch kann die Erfassung der Kraft je nach Anwendungsfall möglichst repräsentativ erreicht werden.

Gemäß einem Aspekt der vorliegenden Erfindung ist der Sensor koaxial ausgebildet, wobei die erste Elektrode von der elastischen Schicht zumindest abschnittsweise, vorzugsweise vollständig, zylindrisch umgeben wird, und wobei die elastische Schicht zumindest abschnittsweise, vorzugsweise vollständig, von der zweiten Elektrode zylindrisch umgeben wird. Hierdurch kann eine kompakte Anordnung der Elemente des Sensors erfolgen, um einen platzsparenden derartigen Sensor zu erhalten. Ferner kann ein Sensor geschaffen werden, welcher aufgrund seiner Rotationssymmetrie unabhängig von seiner Orientierung um die Längsachse als Achse der Rotationssymmetrie verwendet werden kann, da eine radiale Abstandsänderung in jeder Orientierung zu der gleichen Veränderung des Abstands zwischen den beiden Elektroden führt. Somit kann unabhängig von der Orientierung um die Längsachse stets die gleiche Abstandsänderung erfasst werden.

Gemäß einem weiteren Aspekt der vorliegenden Erfindung ist die erste Elektrode als elektrisch leitfähiger Draht aus Vollmaterial oder als Litze ausgebildet, wobei der Draht vorzugsweise Kupfer, Aluminium, Silber oder Gold aufweist oder daraus besteht. Ein Draht aus Vollmaterial kann einfach hergestellt und verarbeitet werden. Eine Litze kann eine höhere Dehnbarkeit als ein Draht aus Vollmaterial aufweisen, so dass der Sensor den Kraftbelastungen länger standhalten und somit eine längere Lebensdauer aufweisen kann. Die Materialien Kupfer, Aluminium, Silber oder Gold können eine hohe elektrische Leitfähigkeit aufweisen, wobei je nach Anwendungsfall zwischen dem Maße der elektrischen Leitfähigkeit, den Materialkosten sowie ggfs. weiteren Eigenschaften der Materialien abzuwägen ist.

Gemäß einem weiteren Aspekt der vorliegenden Erfindung ist die zweite Elektrode als elektrisch leitfähige Schicht als Folie oder als Geflecht, Gewirke oder Gewebe ausgebildet, wobei die Schicht vorzugsweise Kupfer, Aluminium, Silber oder Gold aufweist oder daraus besteht. Durch die Verwendung einer Schicht kann eine möglichst großflächige zweite Elektrode geschaffen werden, so dass ein Kraftfluss entsprechend großflächig erfasst werden kann, falls die Schicht zumindest im Wesentlichen eben verwendet wird. Bei der Verwendung der Schicht der zweiten Elektrode in zylindrischer Form bei einem koaxial ausgebildeten Sensor kann die erste Elektrode von der zweiten Elektrode umschlossen werden, um die koaxiale Anordnung zu schaffen. In jedem Fall kann eine Schicht als Folie einfach und kostengünstig hergestellt werden. Die alternative Ausgestaltung der Schicht als Geflecht, Gewirke oder Gewebe kann wie bei einer Litze als erste Elektrode zu einer höheren Dehnbarkeit als bei einer Folie führen. Unter einem Geflecht wird ein flächiges Gebilde verstanden, welches durch Flechten als regelmäßiges Ineinanderschlingen mehrerer Stränge aus biegsamen Material geschaffen wird. Unter einem Gewebe wird ein textiles Flächengebilde aus mindestens zwei rechtwinklig oder nahezu rechtwinklig verkreuzten Fadensystemen verstanden. Der Unterschied eines Geflechts zu einem Gewebe liegt darin, dass beim Flechten die Fäden nicht rechtwinklig zugeführt werden. Unter einem Gewirke wird ein durch Maschenbildung hergestelltes Fadensystemen verstanden.

Gemäß einem weiteren Aspekt der vorliegenden Erfindung weist der Sensor ferner wenigstens eine Schutzschicht auf, welche, vorzugsweise direkt, auf der dem Elastomerelement zugewandten Seite wenigstens einer Elektrode, vorzugsweise der zweiten Elektrode, angeordnet ist. Hierdurch kann die Elektrode auf dieser Seite geschützt werden. Diese Schutzschicht kann dem Schutz der Elektrode im unverbauten Zustand dienen, aber auch dem Schutz gegenüber dem Elastomerelement im verbauten Zustand.

Gemäß einem weiteren Aspekt der vorliegenden Erfindung ist die Schutzschicht elektrisch isolierend ausgebildet. Hierdurch kann die Elektrode auf dieser Seite elektrisch isoliert werden, so dass eine elektrische Sensorfunktion besser gegenüber einer weiteren Elektrode auf der der Schutzschicht abgewandten Seite ausgeübt werden kann.

Gemäß einem weiteren Aspekt der vorliegenden Erfindung ist die Schutzschicht elastisch ausgebildet, wobei die Schutzschicht vorzugsweise ein Silikon aufweist, besonders vorzugsweise aus einem Silikon besteht. Auf diese Art und Weise kann eine möglichst ungestörte Kraftübertragung durch die Schutzschicht hindurch erfolgen, um trotz der Nutzung der vorteilhaften Eigenschaften der Schutzschicht die sensorische Erfassung der Kraft möglichst wenig bis gar nicht zu beeinflussen. Dies kann durch die Verwendung von Silikon einfach, robust und bzw. oder kostengünstig erfolgen.

Gemäß einem weiteren Aspekt der vorliegenden Erfindung steht wenigstens eine Elektrode, vorzugsweise die zweite Elektrode, in direktem Kontakt mit dem Elastomerelement, wobei die Elektrode vorzugsweise auf der dem Elastomerelement zugewandten Seite zumindest abschnittsweise, vorzugsweise vollständig, einen Haftvermittler, vorzugsweise ferner eine Haftelastomermischung, aufweist, so dass eine Haftung zwischen der Elektrode und dem Elastomerelement hergestellt wird. Hierdurch kann eine möglichst direkte und damit ungestörte Kraftübertragung realisiert werden. Die Verwendung eines Haftvermittler und ggfs. einer zusätzlichen Haftelastomermischung kann die Verbindung zwischen der Elektrode und dem Elastomerelement verbessern, so dass auch die direkte Kraftübertragung erhöht bzw. sichergestellt werden kann, was die Genauigkeit der Kraftmessung verbessern kann. Auch kann die Lebensdauer des Sensors hierdurch verbessert werden.

Gemäß der vorliegenden Erfindung ist der Sensor länglich ausgebildet, wobei der Sensor zumindest abschnittsweise in der Richtung seiner länglichen Erstreckung zumindest im Wesentlichen quer zur Richtung des Kraftflusses angeordnet ist.

Unter einem länglichen Sensor ist ein solcher zu verstehen, welcher sich deutlich länger in einer Richtung, nämlich in seiner Längsrichtung, erstreckt als in den anderen beiden kartesischen Raumrichtungen, nämlich der Querrichtung und der Höhe. In zylindrischen Koordinaten betrachtet erstreckt sich der längliche Sensor deutlich länger in der Richtung seiner Längsachse als in der radialen Richtung. Durch die längliche Erstreckung des Sensors kann ein möglichst großer Bereich innerhalb des Elastomerelements sensorisch erfasst werden, ohne gleichzeitig die Kraftübertragung durch das Elastomerelement zu sehr zu unterbrechen. Hierbei den länglichen Sensor zumindest im Wesentlichen, vorzugsweise genau, quer zur Richtung des Kraftflusses anzuordnen kann dies mit einem möglichst kurzen Sensor ermöglichen. Auch kann die Kraft des Kraftflusses, welche senkrecht auf den Sensor wirkt, entsprechend direkt erfasst werden.

Gemäß einem weiteren Aspekt der vorliegenden Erfindung erstreckt sich der Sensor zumindest abschnittsweise, vorzugsweise vollständig, geradlinig. Dies kann die nachträgliche Einbringung eines derartigen Sensors in ein Elastomerelement vereinfachen, da von außen ein geradliniges Loch als Sackloch oder als Durchgangsöffnung eingebracht werden kann, um den Sensor aufzunehmen. Dies kann fertigungstechnisch z.B. durch Bohren aufgrund der Geradlinigkeit einer Bohrung einfach und schnell erfolgen. Auch kann ein sich möglichst weit erstreckender Bereich des Elastomerelements durch einen sich geradlinig erstreckenden Sensor mit einem möglichst kurzen Sensor erfasst werden, was die hierzu erforderlichen Kosten gering halten kann.

Gemäß einem weiteren Aspekt der vorliegenden Erfindung erstreckt sich der Sensor zumindest abschnittsweise, vorzugsweise vollständig, ringförmig. Hierdurch kann eine vergleichsweise große Fläche geschaffen werden, über welche der Sensor die Kraft des Kraftflusses erfassen kann. Dies kann die Genauigkeit der Erfassung erhöhen.

Gemäß einem weiteren Aspekt der vorliegenden Erfindung ist der Sensor geteilt ausgebildet, wobei die erste Elektrode durchgehend und die zweite Elektrode unterbrochen ausgebildet ist. Hierdurch können zwei Messwerte mit einem Sensor erfasst werden, so dass eine Kraftverteilung erfasst werden kann, z.B. ob die Belastung eher links oder rechts auftritt.

Gleichzeitig können die jeweiligen Kraftwerte dazu verwendet werden, um die jeweiligen Kräfte sensorisch zu erfassen und hieraus den Unterschied der Belastung zu berechnen. Die Gesamtkraft kann durch die Summierung der beiden einzelnen Messwerte bestimmt werden.

Gemäß einem weiteren Aspekt der vorliegenden Erfindung ist der Sensor ausgebildet, so dass die Veränderung des Abstands der beiden Elektroden zueinander proportional zur Kraft des Kraftflusses zwischen dem ersten Körper und dem zweiten Körper ist. Dies kann über die Wahl der Geometrien der Elektroden sowie deren Abstand zueinander je nach Anwendungsfall realisiert werden. Unter einem proportionalen Zusammenhang von Abstand bzw. Abstandsveränderung und Kraft ist ein linearer Zusammenhang zu verstehen, welcher entsprechend einfach und direkt ausgewertet werden kann.

Gemäß einem weiteren Aspekt der vorliegenden Erfindung ist der Sensor ausgebildet, so dass die Kapazität zwischen den beiden Elektroden proportional zum Abstand der beiden Elektroden zueinander ist. Entsprechend einfach und direkt kann der lineare Zusammenhang zwischen der Kapazität und dem Abstand erfasst und ausgewertet werden.

Gemäß einem weiteren Aspekt der vorliegenden Erfindung weist die elastische Schicht des Sensors zumindest im Wesentlichen die gleiche Elastizität wie das Elastomerelement auf. Hierdurch kann der Sensor derart in dem Kraftfluss angeordnet werden, dass die Kraft möglichst repräsentativ erfasst werden kann, weil aufgrund der gleichen Elastizität des Elastomerelements und des Sensors auch dieselbe Kraft durch den Sensor wie durch das Elastomerelement fließen kann. Dies kann die Qualität des erfassten Sensorsignals erhöhen sowie die Auswertung vereinfachen.

Mehrere Ausführungsbeispiele der vorliegenden Erfindung werden nachstehend im Zusammenhang mit den folgenden Figuren erläutert. Darin zeigt:
- Fig. 1: einen schematischen Längsschnitt eines Sensors eines erfindungsgemäßen elastischen Lagerelements;
- Fig. 2: einen schematischen Querschnitt der Fig. 1;
- Fig. 3: eine perspektivische Darstellung eines erfindungsgemäßen elastischen Lagerelements gemäß eines ersten Ausführungsbeispiels;
- Fig. 4: eine perspektivische Darstellung eines erfindungsgemäßen elastischen Lagerelements gemäß eines zweiten Ausführungsbeispiels; und
- Fig. 5: eine perspektivische Darstellung eines erfindungsgemäßen elastischen Lagerelements gemäß eines dritten Ausführungsbeispiels.

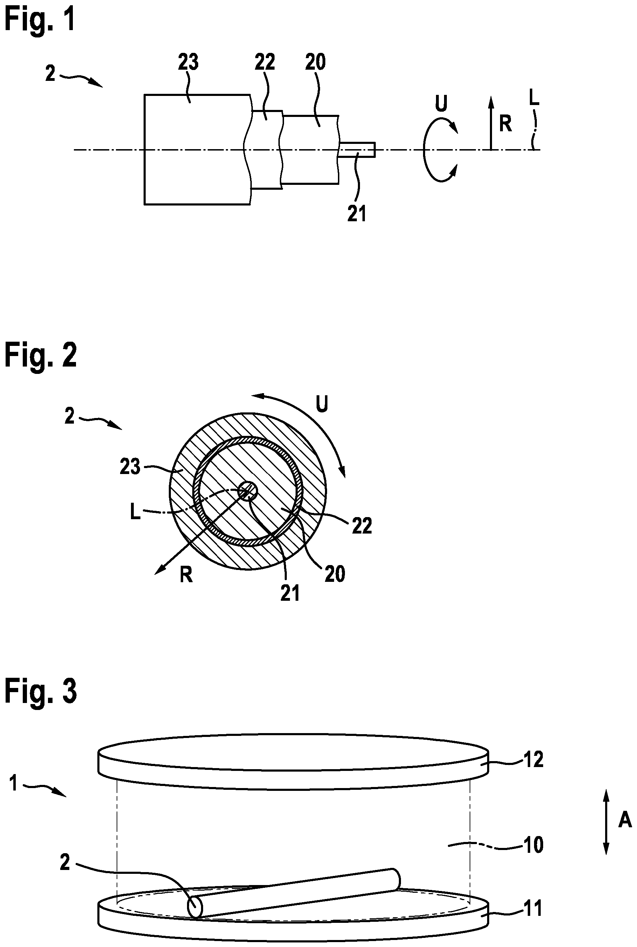

Fig. 1 zeigt einen schematischen Längsschnitt eines Sensors 2 eines erfindungsgemäßen elastischen Lagerelements 1. Fig. 2 zeigt einen schematischen Querschnitt der Fig. 1. Der Sensor 2 erstreckt sich länglich entlang seiner Längsachse L, von der sich eine radiale Richtung R senkrecht weg erstreckt. Radial innenliegend weist der Sensor 2 eine erste Elektrode 21 auf, welche auch als innere Elektrode 21 bezeichnet werden kann. Radial um die erste Elektrode 21 herum ist eine zylindrische elastische Schicht 20 angeordnet, welche die erste Elektrode 21 in der Umfangsrichtung U umschließt. Die elastische Schicht 20 wird von radial außen von einer zweiten Elektrode 22 in der Umfangsrichtung U umschlossen.

Die beiden Elektroden 21, 22 sind elektrisch leitfähig ausgebildet und werden in der Richtung der Längsachse L von außerhalb kontaktiert (nicht dargestellt). Die dazwischenliegende Schicht 20 ist elastisch sowie elektrisch isolierend ausgebildet, so dass z.B. eine Kapazität zwischen den beiden Elektroden 21, 22 erfasst werden kann. Wird dabei eine Kraft bzw. ein Druck von außen auf die zweite Elektrode 22 ausgeübt, so wird an dieser Stelle der radiale Abstand zwischen den beiden Elektroden 21, 22 verringert. Dies kann über eine entsprechende Änderung der Kapazität erfasst und in einen Kraft- bzw. Druckwert umgerechnet werden, so dass der Sensor 2 auch als Kraft- oder als Drucksensor 2 bezeichnet werden kann.

Dabei weist die elastische Schicht 20 eine Kautschukmischung auf, welche wenigstens einen Silikonkautschuk als einzige Kautschukkomponente und Mikrohohlkugeln aufweist. Hierdurch kann eine elastische, elektrisch isolierende Schicht 20 zwischen den beiden Elektroden 21, 22 geschaffen werden, welche zudem auch gut kompressibel ist, so dass bereits geringe Kräfte mit vergleichsweise hoher Genauigkeit sensorisch erfasst werden können.

Optional und in den Fig. 1 und 2 dargestellt wird die zweite Elektrode 22 von einer ringförmigen Schutzschicht 23 zum Schutz gegenüber äußeren Einflüssen in der Umfangsrichtung U umschlossen. Die Schutzschicht 23 ist aus einer Silikonmischung elastisch sowie elektrisch isolierend ausgebildet. Auf die Schutzschicht 23 kann auch verzichtet werden.

Fig. 3 zeigt eine perspektivische Darstellung eines erfindungsgemäßen elastischen Lagerelements 1 gemäß eines ersten Ausführungsbeispiels. Ein Sensor 2 ist dabei geradlinig und senkrecht zur Haupteinfederungsrichtung A des elastischen Lagerelements 1 in dieses integriert angeordnet. Das elastische Lagerelement 1 weist dabei einen Elastomerkörper 10 in Form einer Gummifeder 10 auf, welcher zwischen einem ersten Körper 11 als unteres Anschlagelement 11 und einem zweiten Körper 12 als oberes Anschlagelement 12 angeordnet ist. Der Sensor 2 ist dabei derart innerhalb des Elastomerkörpers 10 angeordnet, dass Kräfte aus dem Kraftfluss in der Haupteinfederungsrichtung A des Elastomerkörpers 10 sensorisch wie zuvor beschrieben erfasst werden können.

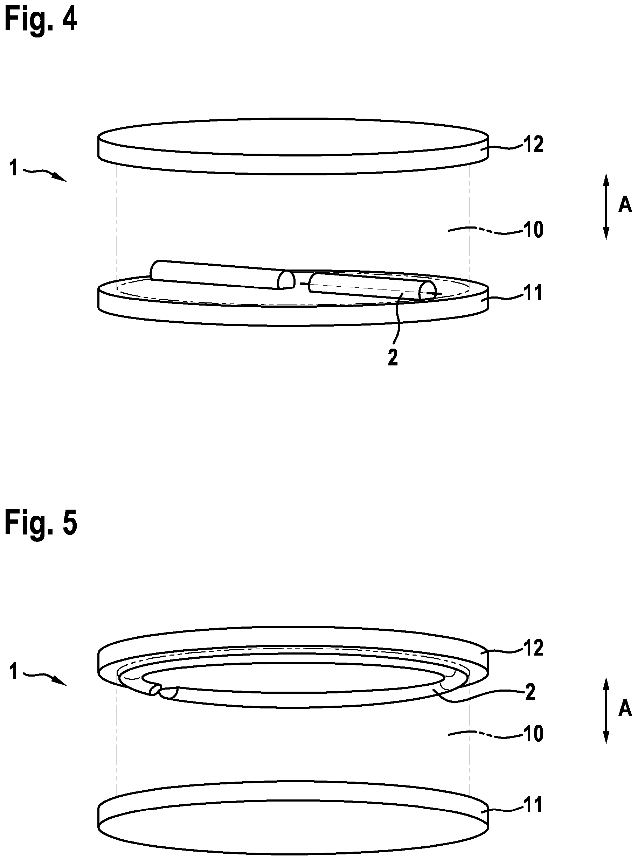

Fig. 4 zeigt eine perspektivische Darstellung eines erfindungsgemäßen elastischen Lagerelements 1 gemäß eines zweiten Ausführungsbeispiels. In diesem Fall ist der Sensor 2 unterbrochen ausgebildet, wobei die erste Elektrode 21 durchgehend ausgebildet ist.

Fig. 5 zeigt eine perspektivische Darstellung eines erfindungsgemäßen elastischen Lagerelements 1 gemäß eines dritten Ausführungsbeispiels. In diesem Fall ist der Sensor 2 ringförmig angeordnet, um die sensorisch wirksame Fläche zu vergrößern.

### Bezugszeichenliste (Teil der Beschreibung)

- A: Haupteinfederungsrichtung des elastischen Lagerelements 1
- L: Längsachse
- R: radiale Richtung
- U: Umfangsrichtung

- 1: elastisches Lagerelement
- 10: Elastomerelement; Gummifeder
- 11: erster Körper; unteres Anschlagelement
- 12: zweiter Körper; oberes Anschlagelement

- 2: Sensor; Drucksensor; Kraftsensor
- 20: elastische Schicht; Kautschukmischung
- 21: erste Elektrode; innere Elektrode
- 22: zweite Elektrode; äußere Elektrode
- 23: Schutzschicht

## Patentansprüche

1. Elastisches Lagerelement (1)
mit wenigstens einem ersten Körper (11),
mit wenigstens einem zweiten Körper (12) und
mit wenigstens einem Elastomerelement (10), welches in der Richtung eines Kraftflusses zwischen dem ersten Körper (11) und dem zweiten Körper (12) angeordnet ist,
ferner mit wenigstens einem Sensor (2), welcher ausgebildet und angeordnet ist, eine Kraft im Kraftfluss zwischen dem ersten Körper (11) und dem zweiten Körper (12) direkt oder indirekt zu erfassen,
wobei der Sensor (2)
wenigstens eine elastische Schicht (20),
wenigstens eine erste Elektrode (21) und
wenigstens eine zweite Elektrode (22)
aufweist,
wobei die elastische Schicht (20) zumindest abschnittweise zwischen der ersten Elektrode (21) und der zweiten Elektrode (22) angeordnet ist,
wobei der Sensor (2) derart im Kraftfluss zwischen dem ersten Körper (11) und dem zweiten Körper (12) angeordnet ist, so dass durch die Kraft der Abstand der beiden Elektroden (21, 22) zueinander verändert und hierüber die Kraft zumindest teilweise erfasst werden kann,
**dadurch gekennzeichnet, dass**
die elastische Schicht (20) eine Kautschukmischung aufweist, welche wenigstens einen Silikonkautschuk als einzige Kautschukkomponente und Mikrohohlkugeln aufweist,
wobei
der Sensor (2) länglich ausgebildet ist,
wobei der Sensor (2) zumindest abschnittsweise in der Richtung seiner länglichen Erstreckung zumindest im Wesentlichen quer zur Richtung des Kraftflusses angeordnet ist.

2. Elastisches Lagerelement (1) nach Anspruch 1, **dadurch gekennzeichnet, dass**
der Sensor (2) koaxial ausgebildet ist,
wobei die erste Elektrode (21) von der elastischen Schicht (20) zumindest abschnittsweise, vorzugsweise vollständig, zylindrisch umgeben wird, und
wobei die elastische Schicht (20) zumindest abschnittsweise, vorzugsweise vollständig, von der zweiten Elektrode (22) zylindrisch umgeben wird.

3. Elastisches Lagerelement (1) nach Anspruch 1 oder 2, **dadurch gekennzeichnet, dass**
die erste Elektrode (21) als elektrisch leitfähiger Draht aus Vollmaterial oder als Litze ausgebildet ist,
wobei der Draht vorzugsweise Kupfer, Aluminium, Silber oder Gold aufweist oder daraus besteht.

4. Elastisches Lagerelement (1) nach einem der vorherigen Ansprüche, **dadurch gekennzeichnet, dass**
die zweite Elektrode (22) als elektrisch leitfähige Schicht als Folie oder als Geflecht, Gewirke oder Gewebe ausgebildet ist,
wobei die Schicht vorzugsweise Kupfer, Aluminium, Silber oder Gold aufweist oder daraus besteht.

5. Elastisches Lagerelement (1) nach einem der vorherigen Ansprüche, **dadurch gekennzeichnet, dass**
der Sensor (2) ferner wenigstens eine Schutzschicht (23) aufweist, welche, vorzugsweise direkt, auf der dem Elastomerelement (10) zugewandten Seite wenigstens einer Elektrode (21, 22), vorzugsweise der zweiten Elektrode (22), angeordnet ist.

6. Elastisches Lagerelement (1) nach Anspruch 5, **dadurch gekennzeichnet, dass** die Schutzschicht (23) elektrisch isolierend ausgebildet ist.

7. Elastisches Lagerelement (1) nach Anspruch 5 oder 6, **dadurch gekennzeichnet, dass**
die Schutzschicht (23) elastisch ausgebildet ist,
wobei die Schutzschicht (23) vorzugsweise ein Silikon aufweist, besonders vorzugsweise aus einem Silikon besteht.

8. Elastisches Lagerelement (1) nach einem der Ansprüche 1 bis 4, **dadurch gekennzeichnet, dass**
wenigstens eine Elektrode (21, 22), vorzugsweise die zweite Elektrode (22), in direktem Kontakt mit dem Elastomerelement (10) steht,
wobei die Elektrode (21, 22) vorzugsweise auf der dem Elastomerelement (10) zugewandten Seite zumindest abschnittsweise, vorzugsweise vollständig, einen Haftvermittler, vorzugsweise ferner eine Haftelastomermischung, aufweist, so dass eine Haftung zwischen der Elektrode (21, 22) und dem Elastomerelement (10) hergestellt wird.

9. Elastisches Lagerelement (1) nach einem der vorherigen Ansprüche, **dadurch gekennzeichnet, dass**
sich der Sensor (2) zumindest abschnittsweise, vorzugsweise vollständig, geradlinig erstreckt.

10. Elastisches Lagerelement (1) nach einem der vorherigen Ansprüche, **dadurch gekennzeichnet, dass**
sich der Sensor (2) zumindest abschnittsweise, vorzugsweise vollständig, ringförmig erstreckt.

11. Elastisches Lagerelement (1) nach einem der vorherigen Ansprüche, **dadurch gekennzeichnet, dass**
der Sensor (2) geteilt ausgebildet ist,
wobei die erste Elektrode (21) durchgehend und die zweite Elektrode (22) unterbrochen ausgebildet ist.

12. Elastisches Lagerelement (1) nach einem der vorherigen Ansprüche, **dadurch gekennzeichnet, dass**
der Sensor (2) ausgebildet ist, so dass die Veränderung des Abstands der beiden Elektroden (21, 22) zueinander proportional zur Kraft des Kraftflusses zwischen dem ersten Körper (11) und dem zweiten Körper (12) ist.

13. Elastisches Lagerelement (1) nach einem der vorherigen Ansprüche, **dadurch gekennzeichnet, dass**
der Sensor (2) ausgebildet ist, so dass die Kapazität zwischen den beiden Elektroden (21, 22) proportional zum Abstand der beiden Elektroden (21, 22) zueinander ist.

14. Elastisches Lagerelement (1) nach einem der vorherigen Ansprüche, **dadurch gekennzeichnet, dass**
die elastische Schicht (20) des Sensors (2) zumindest im Wesentlichen die gleiche Elastizität wie das Elastomerelement (10) aufweist.

## Claims

1. Elastic bearing element (1)
having at least one first body (11),
having at least one second body (12), and
having at least one elastomer element (10) arranged in the direction of a force flow between the first body (11) and the second body (12),
furthermore having at least one sensor (2) configured and arranged to detect directly or indirectly a force in the force flow between the first body (11) and the second body (12),
wherein the sensor (2) comprises
at least one elastic layer (20),
at least one first electrode (21) and
at least one second electrode (22),
,
wherein the elastic layer (20) is arranged at least in sections between the first electrode (21) and the second electrode (22),
wherein the sensor (2) is arranged in the force flow between the first body (11) and the second body (12) such that, by means of the force, the distance between the two electrodes (21, 22) can be altered and, by this means, the force can be at least partly detected,
**characterized in that** the elastic layer (20) comprises a rubber mixture comprising at least one silicone rubber, as the sole rubber component, and hollow microspheres,
wherein the sensor (2) is embodied in an elongate fashion,
wherein the sensor (2), at least in sections in the direction of its elongate extent, is arranged at least substantially transversely with respect to the direction of the force flow.

2. Elastic bearing element (1) according to Claim 1, **characterized in that**
the sensor (2) is embodied in a coaxial fashion,
wherein the first electrode (21) is surrounded by the elastic layer (20) cylindrically at least in sections, preferably completely, and
wherein the elastic layer (20) is surrounded by the second electrode (22) cylindrically at least in sections, preferably completely.

3. Elastic bearing element (1) according to Claim 1 or 2, **characterized in that** the first electrode (21) is embodied as an electrically conductive wire composed of solid material or as a multiple-stranded wire,
wherein the wire preferably comprises or consists of copper, aluminium, silver or gold.

4. Elastic bearing element (1) according to any of the preceding claims,
**characterized in that**
the second electrode (22) is embodied as an electrically conductive layer as a film or as a braiding, a knitted fabric or a woven fabric,
wherein the layer preferably comprises or consists of copper, aluminium, silver or gold.

5. Elastic bearing element (1) according to any of the preceding claims,
**characterized in that**
the sensor (2) furthermore comprises at least one protective layer (23) arranged, preferably directly, on that side of at least one electrode (21, 22), preferably of the second electrode (22), which faces the elastomer element (10).

6. Elastic bearing element (1) according to Claim 5, **characterized in that** the protective layer (23) is embodied in an electrically insulating fashion.

7. Elastic bearing element (1) according to Claim 5 or 6, **characterized in that** the protective layer (23) is embodied in an elastic fashion,
wherein the protective layer (23) preferably comprises a silicone, particularly preferably consists of a silicone.

8. Elastic bearing element (1) according to any of Claims 1 to 4, **characterized in that**
at least one electrode (21, 22), preferably the second electrode (22), is in direct contact with the elastomer element (10),
wherein the electrode (21, 22) preferably comprises on the side facing the elastomer element (10), at least in sections, preferably completely, an adhesion promoter, preferably furthermore an adhesive elastomer mixture, thereby producing adhesion between the electrode (21, 22) and the elastomer element (10).

9. Elastic bearing element (1) according to any of the preceding claims,
**characterized in that**
the sensor (2) extends rectilinearly at least in sections, preferably completely.

10. Elastic bearing element (1) according to any of the preceding claims,
**characterized in that**
the sensor (2) extends in a ring-shaped fashion at least in sections, preferably completely.

11. Elastic bearing element (1) according to any of the preceding claims,
**characterized in that**
the sensor (2) is embodied in a divided fashion,
wherein the first electrode (21) is embodied in a continuous fashion and the second electrode (22) is embodied in an interrupted fashion.

12. Elastic bearing element (1) according to any of the preceding claims,
**characterized in that**
the sensor (2) is embodied such that the alteration of the distance between the two electrodes (21, 22) is proportional to the force of the force flow between the first body (11) and the second body (12).

13. Elastic bearing element (1) according to any of the preceding claims,
**characterized in that**
the sensor (2) is embodied such that the capacitance between the two electrodes (21, 22) is proportional to the distance between the two electrodes (21, 22).

14. Elastic bearing element (1) according to any of the preceding claims,
**characterized in that**
the elastic layer (20) of the sensor (2) at least substantially has the same elasticity as the elastomer element (10).

## Revendications

1. Elément de palier élastique (1), comprenant
au moins un premier corps (11),
au moins un deuxième corps (12), et
au moins un élément élastomère (10) qui est disposé dans le sens d'un flux de force entre le premier corps (11) et le deuxième corps (12),
en outre au moins un capteur (2) qui est réalisé et disposé pour détecter directement ou indirectement une force dans le flux de force entre le premier corps (11) et le deuxième corps (12),
dans lequel le capteur (2) présente
au moins une couche élastique (20),
au moins une première électrode (21), et
au moins une deuxième électrode (22),
dans lequel la couche élastique (20) est disposée au moins par endroits entre la première électrode (21) et la deuxième électrode (22),
dans lequel le capteur (2) est disposé dans le flux de force entre le premier corps (11) et le deuxième corps (12) de telle sorte que la force permet de détecter au moins en partie la distance entre les deux électrodes (21, 22) et de ce fait la force, **caractérisé en ce que** la couche élastique (20) présente un mélange de caoutchouc qui présente au moins un caoutchouc de silicone en tant que composant de caoutchouc unique et des microsphères creuses,
dans lequel le capteur (2) est réalisé en longueur,
dans lequel le capteur (2) est disposé au moins par endroits dans le sens de son extension longitudinale au moins substantiellement transversalement au sens du flux de force.

2. Elément de palier élastique (1) selon la revendication 1, **caractérisé en ce que**
le capteur (2) est réalisé de manière coaxiale,
dans lequel la première électrode (21) est entourée de manière cylindrique par la couche élastique (20) au moins par endroits, de préférence entièrement, et
dans lequel la couche élastique (20) est entourée de manière cylindrique par la deuxième électrode (22) au moins par endroits, de préférence entièrement.

3. Elément de palier élastique (1) selon la revendication 1 ou 2, **caractérisé en ce que**
la première électrode (21) est réalisée sous la forme d'un fil métallique électriquement conducteur en matériau plein ou sous forme de fil torsadé,
dans lequel de préférence le fil métallique présente ou est composé de cuivre, d'aluminium, d'argent ou d'or.

4. Elément de palier élastique (1) selon l'une quelconque des revendications précédentes, **caractérisé en ce que**
la deuxième électrode (22) est réalisée comme une couche électriquement conductrice sous forme de film ou de tresse, de maillage ou de tissu,
dans lequel de préférence la couche présente ou est composée de cuivre, d'aluminium, d'argent ou d'or.

5. Elément de palier élastique (1) selon l'une quelconque des revendications précédentes, **caractérisé en ce que**
le capteur (2) présente en outre au moins une couche de protection (23) qui est disposée de préférence directement sur le côté tourné vers l'élément élastomère (10) d'au moins une électrode (21, 22), de préférence de la deuxième électrode (22).

6. Elément de palier élastique (1) selon la revendication 5, **caractérisé en ce que**
la couche de protection (23) est réalisée de manière électriquement isolante.

7. Elément de palier élastique (1) selon la revendication 5 ou 6, **caractérisé en ce que**
la couche de protection (23) est réalisée de manière élastique,
dans lequel de préférence la couche de protection (23) présente un silicone, étant de manière particulièrement préférée composée d'un silicone.

8. Elément de palier élastique (1) selon l'une quelconque des revendications 1 à 4, **caractérisé en ce**
**qu'**au moins une électrode (21, 22), de préférence la deuxième électrode (22), est en contact direct avec l'élément élastomère (10),
dans lequel l'électrode (21, 22) présente de préférence sur le côté tourné vers l'élément élastomère (10) au moins par endroits, de préférence entièrement, un agent adhésif, de préférence en outre un mélange d'élastomère adhésif, de façon à créer une adhérence entre l'électrode (21, 22) et l'élément élastomère (10).

9. Elément de palier élastique (1) selon l'une quelconque des revendications précédentes, **caractérisé en ce que**
le capteur (2) s'étend en ligne droite au moins par endroits, de préférence entièrement.

10. Elément de palier élastique (1) selon l'une quelconque des revendications précédentes, **caractérisé en ce que**
le capteur (2) s'étend en anneau au moins par endroits, de préférence entièrement.

11. Elément de palier élastique (1) selon l'une quelconque des revendications précédentes, **caractérisé en ce que**
le capteur (2) est réalisé de manière divisée,
dans lequel la première électrode (21) est réalisée de manière continue et la deuxième électrode (22) est réalisée de manière discontinue.

12. Elément de palier élastique (1) selon l'une quelconque des revendications précédentes, **caractérisé en ce que**
le capteur (2) est réalisé de sorte qu'une variation de la distance entre les deux électrodes (21, 22) est proportionnelle à la force du flux de force entre le premier corps (11) et le deuxième corps (12).

13. Elément de palier élastique (1) selon l'une quelconque des revendications précédentes, **caractérisé en ce que**
le capteur (2) est réalisé de telle sorte que la capacité entre les deux électrodes (21, 22) est proportionnelle à la distance entre les deux électrodes (21, 22).

14. Elément de palier élastique (1) selon l'une quelconque des revendications précédentes, **caractérisé en ce que**
la couche élastique (20) du capteur (2) présente au moins substantiellement la même élasticité que l'élément élastomère (10).
